# EUROPEAN PATENT APPLICATION

(11) **EP 4 249 776 A1**
(43) Date of publication of application: **27.09.2023**
(21) Application number: 22164544.3
(22) Date of filing: 25.03.2022
(51) Int. Cl.: F16H 61/00, F16H 3/08, B60K 1/00, F16H 63/30, F16H 3/093

(54) **GEARBOX WITH IMPROVED PARKING LOCK, ELECTRIC DRIVETRAIN AND VEHICLE WITH SUCH A DRIVETRAIN**

(71) Applicant: Valeo eAutomotive Germany GmbH, 91056 Erlangen (DE)
(72) Inventor: Kühlkamp, Karsten, c/o VSeA 91056 Erlangen (DE); Kolbe, Stephan, c/o VSeA 91056 Erlangen (DE)
(74) Representative: Valeo Powertrain Systems

(57) **Abstract**

A gearbox (1, 1a..1d) for an electric drivetrain (28, 28a..28e) is proposed, which comprises a gearbox input (2), a gearbox output (4), a number of gear wheels (5..8) and at least a first and a second form-fit clutch (9, 10) providing at least two switchable transmission ratios between the gearbox input (2) and the gearbox output (4) in different switching states (D1, D2) of the form-fit clutches (9, 10). In addition, a parking state (P) is provided, in which both the first transmission ratio and the second transmission ratio are engaged/activated between the gearbox input (2) and the gearbox output (4) at the same time and a transmission of a rotational movement between the gearbox input (2) and the gearbox output (4) is blocked. Moreover, an electric drivetrain (28, 28a..28e) with such a gearbox (1, 1a..1d) and a vehicle (34) with such an electric drivetrain (28, 28a..28e) are disclosed.

## Description

### TECHNICAL FIELD

The invention relates to a gearbox for an electric drivetrain, which comprises a gearbox input for coupling an electric motor to the gearbox, a gearbox output for coupling wheels of an electric or hybrid vehicle to the gearbox, a number of gear wheels and at least a first and a second form-fit clutch providing at least two switchable transmission ratios between the gearbox input and the gearbox output. In a first switching state of the form-fit clutches, a first transmission ratio is provided between the gearbox input and the gearbox output, and in a second switching state of the form-fit clutches, a second transmission ratio is provided between the gearbox input and the gearbox output. Moreover, the invention relates to an electric drivetrain, which comprises a gearbox of the above kind and an electric machine coupled to the input of the gearbox. Finally, the invention relates to a vehicle having at least two axles, at least one of which is driven at least partially or intermittently by the electric drivetrain of the above kind.

### BACKGROUND ART

A gearbox, an electric drivetrain and a vehicle of the above kind generally are known in prior art. Such a gearbox can be used if a rotational speed or torque of an electric machine has to be adapted to a desired rotational speed or torque in a particular application. In some applications, like it is the case for vehicles, a gearbox output shaft can be blocked in parking state so that a movement of the same is avoided. For this reason, dedicated parking brakes have been developed, which can comprise a toothed wheel with an engageable blocking element. However, such a parking brake needs additional parts what contradicts the efforts for reducing the bill of materials for vehicles and other applications where the gearbox output can be blocked.

### DISCLOSURE OF INVENTION

An object of the invention is to provide an improved gearbox, an improved electric drivetrain and an improved electric vehicle. In particular, a solution shall be proposed, which reduces the number of parts when a parking brake function is provided.

The object of the invention is solved by a gearbox as disclosed in the opening paragraph, wherein additionally a parking state is provided, in which both the first transmission ratio and the second transmission ratio are provided between the gearbox input and the gearbox output at the same time and a rotational movement between the gearbox input and the gearbox output is therefore blocked.

In particular,
- in the first switching state, the first form-fit clutch is engaged and the second form-fit clutch is disengaged and
- in the second switching state, the first form-fit clutch is disengaged and the second form-fit clutch is engaged and
- in the parking state both the first form-fit clutch and the second form-fit clutch are engaged.

Hence, alternatively, the independent claim 1 may be defined as follows: Gearbox for an electric drivetrain, comprising
- a gearbox input for coupling an electric motor to the gearbox,
- a gearbox output for coupling wheels of an electric vehicle to the gearbox and
- a number of gear wheels and at least a first and a second form-fit clutch providing at least two switchable transmission ratios between the gearbox input and the gearbox output, wherein in a first switching state of the form-fit clutches, the first form-fit clutch is engaged and the second form-fit clutch is disengaged and a first transmission ratio is provided between the gearbox input and the gearbox output and wherein in a second switching state of the form-fit clutches, the first form-fit clutch is disengaged and the second form-fit clutch is engaged and a second transmission ratio is provided between the gearbox input and the gearbox output,
wherein
- a parking state is provided, in which both the first form-fit clutch and the second form-fit clutch engage and block a rotational movement between the gearbox input and the gearbox output.

In addition, an electric drivetrain, which comprises a gearbox of the above kind and an electric machine coupled to the input of the gearbox, solves the object of the invention.

Finally, the object of the invention is solved by a vehicle having at least two axles, at least one of which is driven at least partially or intermittently by the electric drivetrain of the above kind.

By the proposed measures, a parking brake function or a parking state of the electric drivetrain can be provided basically without making the bill of materials longer because the first and second form-fit clutch, which are needed anyway, are used to provide this functionality. A separate parking brake, e.g. comprising a toothed wheel with an engageable blocking element, is not required anymore.

Further advantageous embodiments are disclosed in the claims and in the description as well as in the figures.

In one embodiment, the gearbox comprises
- a first shaft,
- a second shaft,
- a first hollow shaft around the second shaft and
- a second hollow shaft around the first hollow shaft,
- wherein a first transmission ratio is provided via the first shaft and the first hollow shaft (and finally the second shaft),
- wherein a second transmission ratio is provided via the first shaft and the second hollow shaft (and finally the second shaft) and
- wherein the second shaft can be coupled to the first hollow shaft by means of the first form-fit clutch, to the second hollow shaft by means of the second form-fit clutch and to both the first hollow shaft and the second hollow shaft by means of the first form-fit clutch and the second form-fit clutch.

Beneficially, this embodiment is very compact. In addition, both the first and the second form-fit clutch are concentric. Accordingly, the actuating mechanism for the form-fit clutches is less complex in this embodiment. The first shaft can be an input shaft and form the gearbox input. Likewise, the second shaft can be an output shaft and form the gearbox output. However, the second shaft may also be an intermediate shaft upstream of an output shaft or gearbox output. Generally, the gearbox output may be connected to further gear wheel stages and/or a differential. However, these further gear wheel stages and/or a differential may also be integral parts of the gearbox.

In another embodiment, the gearbox comprises
- a first shaft,
- a second shaft,
- a first hollow shaft around the second shaft and
- a second hollow shaft around the first shaft,
- wherein a first transmission ratio is provided via the first shaft and the first hollow shaft (and finally the second shaft),
- wherein a second transmission ratio is provided via the second hollow shaft and the second shaft (particularly with the first shaft before the second hollow shaft),
- wherein the second shaft can be coupled to the first hollow shaft by means of the first form-fit clutch, to the second hollow shaft by means of the second form-fit clutch and to both the first hollow shaft and the second hollow shaft by means of the first form fit clutch and the second form fit clutch.

Beneficially, there is no hollow shaft around another hollow shaft in this embodiment. Accordingly, this embodiment involves less complexity with regards supporting the hollow shafts. Again, the first shaft can be an input shaft and form the gearbox input. Likewise, the second shaft can be an output shaft and form the gearbox output. However, the second shaft may also be an intermediate shaft upstream of an output shaft or gearbox output. Generally, the gearbox output may be connected to further gear wheel stages and/or a differential. However, these further gear wheel stages and/or a differential may also be integral part of the gearbox.

In another beneficial embodiment of the gearbox, a neutral state is provided, in which neither the first form-fit clutch, nor the second form-fit clutch are engaged disengaging the gearbox input from the gearbox output. In this way, for example, wheels of a vehicle may be decoupled from the motor.

Beneficially, the form-fit clutches are embodied as dog clutches (with axially facing switching elements) or as a combination of a clutch body and a shifting spline (with radially neighbored switching elements). These are proven means to provide the desired coupling function.

Advantageously, a switching sequence is
a) parking state → first switching state → neutral state → second switching state or vice versa or
b) parking state → second switching state → neutral state → first switching state or vice versa.

It is particularly advantageous if the parking state is next to the first switching state because this eases the engagement of the parking state.

In another advantageous embodiment,
- switching from the first switching state to the parking state causes shifting elements of the second form-fit clutch being spring loaded until the second form-fit clutch is engaged or
- switching from the second switching state to the parking state causes shifting elements of the first form-fit clutch being spring loaded until the first form-fit clutch is engaged.

Generally, both the first form-fit clutch and the second form-fit clutch can be engaged at the same time only in specific positions of the gear wheels depending on the first and the second transmission ratio. In one embodiment, the first form-fit clutch is already engaged when the parking state is activated. In addition, the second form-fit clutch is spring loaded when the parking state is activated so that the second form-fit clutch engages when the shifting elements reach a position allowing said engaging. If the electric drivetrain is part of a vehicle, moving the vehicle slowly causes the gear wheels turning and causes them to reach a position where the second form-fit clutch may engage in addition to the already engaged first form-fit clutch. However, this is not the only possibility, and in another embodiment, switching from the second switching state to the parking state causes the first form-fit clutch being spring loaded until the first form-fit clutch engages when the parking state is adjacent to the second switching state.

In yet another advantageous embodiment, the form-fit elements of the clutches do have an angle at the front of the engaging ends. In this way, accidental actuation of the parking state at high vehicle speeds can be avoided. Alternatively, an electronic control can be provided, which acquires the vehicle speed and forbids actuation of the parking position above a certain speed threshold.

### BRIEF DESCRIPTION OF DRAWINGS

The invention now is described in more detail hereinafter with reference to particular embodiments, which the invention however is not limited to.
- Fig. 1: shows a schematic view of a first example of a gearbox with two concentric hollow shafts in neutral state;
- Fig. 2: shows the gearbox of Fig. 1 in a first switching state;
- Fig. 3: shows the gearbox of Fig. 1 in a second switching state;
- Fig. 4: shows the gearbox of Fig. 1 in the parking state;
- Fig. 5: shows a schematic view of a second example of a gearbox with a different switching sequence in the parking state;
- Fig. 6: shows a schematic view of a third example of a gearbox with another switching sequence in neutral state;
- Fig. 7: shows a schematic view of a fourth example of a gearbox with two parallel hollow shafts in neutral state;
- Fig. 8: shows the gearbox of Fig. 7 in a first switching state;
- Fig. 9: shows the gearbox of Fig. 7 in a second switching state;
- Fig. 10: shows the gearbox of Fig. 7 in the parking state;
- Fig. 11: shows a schematic view of an example of a gearbox where the second form-fit clutch is spring loaded when the parking state is activated;
- Fig. 12: shows form-fit elements of a form-fit clutch have an angle at the front of the engaging ends and
- Fig. 13: shows a schematic view of an electric vehicle.

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure.

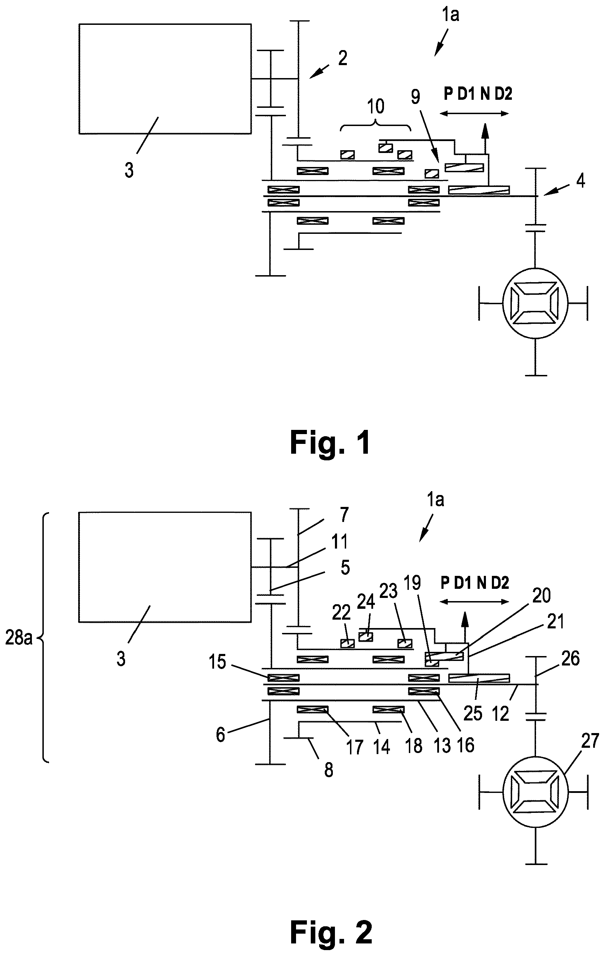

Figs. 1 to 4 show schematic views of a first example of a gearbox 1a in different switching states. The gearbox 1a comprises a gearbox input 2 for coupling an electric motor 3 to the gearbox 1a and a gearbox output 4 for coupling wheels of an electric vehicle to the gearbox 1a. Moreover, the gearbox 1a comprises a number of gear wheels 5..8 and at least a first form-fit clutch 9 and a second form-fit clutch 10 providing at least two switchable transmission ratios between the gearbox input 2 and the gearbox output 4. In detail, the gearbox 1a comprises a first primary gear wheel 5 engaging with a first secondary gear wheel 6 and a second primary gear wheel 7 engaging with a second secondary gear wheel 8.

In this embodiment, the gearbox 1a comprises a first shaft 11, a second shaft 12, a first hollow shaft 13 around the second shaft 12 and a second hollow shaft 14 around the first hollow 13 shaft. Bearings 15 and 16 support the first hollow shaft 13 on the second shaft 12, and bearings 17 and 18 support the second hollow shaft 14 on the first hollow shaft 13.

The first primary gear wheel 5 and the second primary gear wheel 7 are fixed to the first shaft 11, the first secondary gear wheel 6 is fixed to the first hollow shaft 13 and the second secondary gear wheel 8 is fixed to the second hollow shaft 14. Thus, a first transmission ratio is provided via the first shaft 11 and the first hollow shaft 13 by the first primary gear wheel 5 and the first secondary gear wheel 6, and a second transmission ratio is provided via the first shaft 11 and the second hollow shaft 14 by the second primary gear wheel 7 and the second secondary gear wheel 8.

The second shaft 12 can be coupled to the first hollow shaft 13 by means of the first form-fit clutch 9, to the second hollow shaft 14 by means of the second form-fit clutch 10 and to both the first hollow shaft 13 and the second hollow shaft 14 by means of the first form-fit clutch 9 and the second form-fit clutch 10. The first form-fit clutch 9 comprises a clutch body 19 connected to or arranged on the first hollow shaft 13 and a shifting spline 20 connected to a sliding sleeve 21. The second form-fit clutch 10 comprises two clutch bodies 22, 23 connected to the second hollow shaft 14 and a shifting spline 24 connected to the sliding sleeve 21. The sliding sleeve 21 engages with a clutch body 25 on the second shaft 12 and is axially movable together with the shifting spline 20 and the shifting spline 24.

The clutch body 25 may be embodied as a separate part mounted to the second shaft 12 or may be embodied as an integral part of the second shaft 12. In the second case, the clutch body 25 may be seen as an outer shifting spline on the second shaft 12. Similar considerations can be made for the clutch bodies 19, 22 and 23. Accordingly, the clutch body 19 may be embodied as a separate part mounted to the first hollow shaft 13 or may be embodied as an integral part of the first hollow shaft 13, wherein in the second case the clutch body 19 may be seen as an outer shifting spline on the first hollow shaft 13. Similarly, the clutch bodies 22 and 23 may be embodied as a separate parts mounted to the second hollow shaft 14 or may be embodied as integral parts of the second hollow shaft 14, wherein in the second case the clutch bodies 22 and 23 may be seen as outer shifting splines on the second hollow shaft 14. Similar considerations may also be made for the shifting splines 20 and 24, which may be seen as inner shifting splines and may be integral parts of the sliding sleeve 21 or may be embodied as dedicated rings mounted to the sliding sleeve 21.

Finally, the gearbox 1a comprises an output gear wheel stage with a gear wheel 26 on the second shaft 12, which engages with a toothing or gear wheel on a differential 27, to which wheels of an electric vehicle can be coupled. The gearbox 1a together with the electric motor 3 forms an electric drivetrain 28.

In Fig. 1 the first shaft 11 is an input shaft and forms the gearbox input 2. The first shaft 11 at the same time can be a motor shaft of the electric motor 3. Likewise, the output shaft 12 is an output shaft and forms the gearbox output 4 in this embodiment. Alternatively, the gear wheel 26 or the differential 27 can be seen as gearbox output 2. In particular, in the latter case, the second shaft 12 may also be seen as an intermediate shaft. However, the gear wheel 26 or the differential 27 may also be integral part of the gearbox 1a.

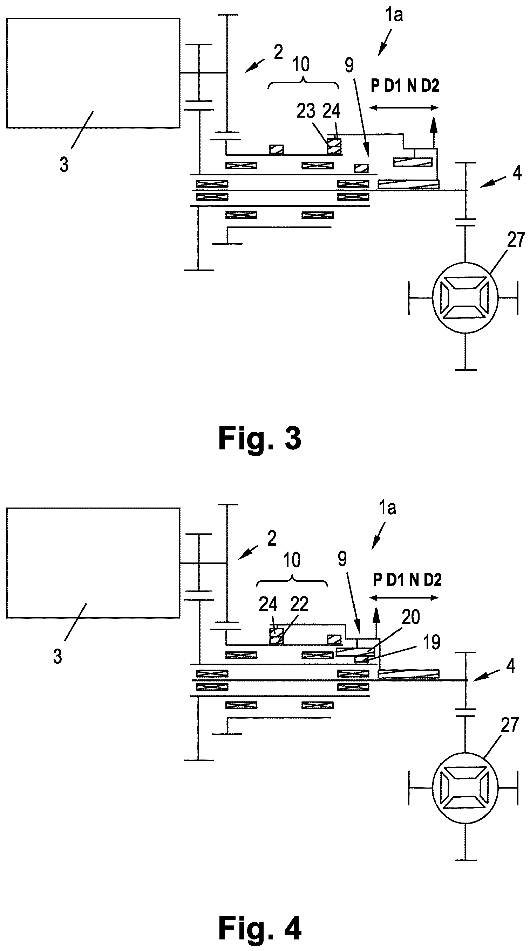

Fig. 1 shows the gearbox 1a in a neutral state N, Fig. 2 shows the gearbox 1a in a first switching state D1 of the form-fit clutches 9, 10 providing a first transmission ratio between the gearbox input 2 and the gearbox output 4, and Fig. 3 shows the gearbox 1a in a second switching state D2 of the form-fit clutches 9, 10 providing a second transmission ratio between the gearbox input 2 and the gearbox output 4. Finally, Fig. 4 shows the gearbox 1a in a parking state P, in which both the first form-fit clutch 9 and the second form-fit clutch 10 are engaged and block a transmission of a rotational movement between the gearbox input 2 and the gearbox output 4.

In detail, in a neutral state N neither the first form-fit clutch 9, nor the second form-fit clutch 10 engages. In the first switching state D1, the first form-fit clutch 9 (i.e. its clutch body 19 and its shifting spline 20 on the sliding sleeve 21) engages while the second form-fit clutch 10 disengages. In the second switching state D2, the second form-fit clutch 10 (i.e. its clutch body 23 and its shifting spline 24 on the sliding sleeve 21) engages while the first form-fit clutch 9 disengages. In the parking state P, finally, first form-fit clutch 9 (i.e. its clutch body 19 and its shifting spline 20 on the sliding sleeve 21) and the second form-fit clutch 10 (i.e. its clutch body 22 and shifting spline 24 on the sliding sleeve 21) engage.

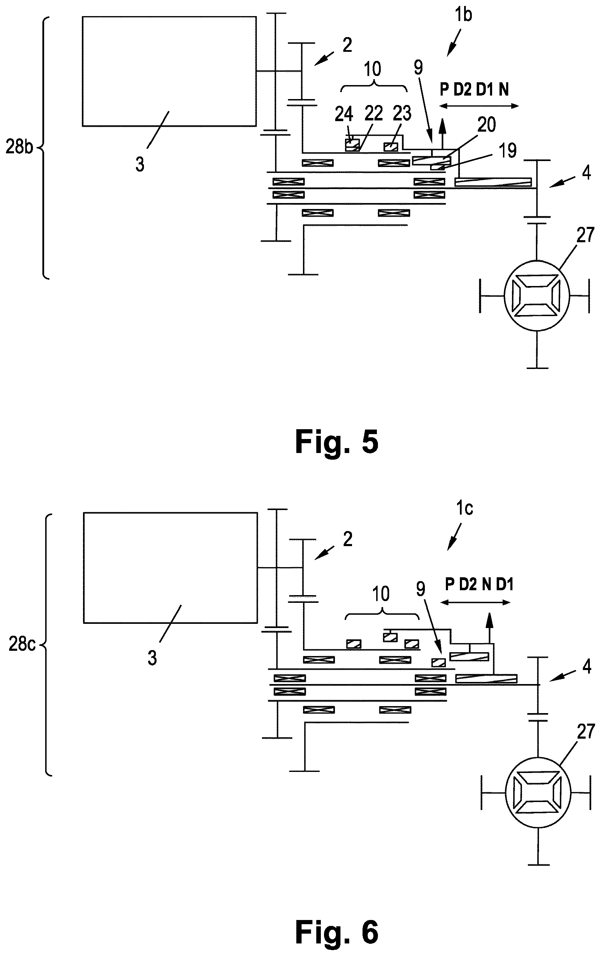

In the example shown in Figs. 1 to 4, the switching sequence of the gearbox 1a is parking state P → first switching state D1 → neutral state N → second switching state D2 or vice versa. However, this is not the only possibility, and Fig. 5 shows an example of a gearbox 1b with a different switching sequence. In detail, the switching sequence of the gearbox 1b is parking state P → second switching state D2 → first switching state D1 → neutral state N or vice versa. The gearbox 1b is very similar to the gearbox 1a shown in Figs. 1 to 4. Just the arrangement of the clutch bodies 22, 23 of the second clutch 10 and the geometry of the sliding sleeve 21 are differently. In Fig. 5, the parking state P of the gearbox 1b is shown but one can easily imagine that the other states can be obtained in a way, which is similar to the way the states can be obtained for the gearbox 1a.

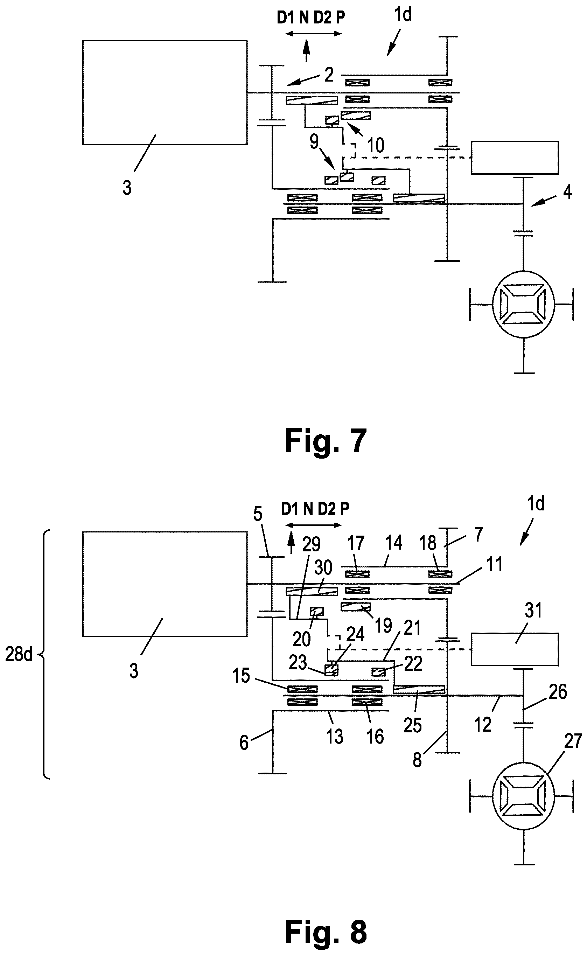

Fig. 6 shows an example of a gearbox 1c which is very similar to the gearbox 1a shown in Figs. 1 to 4, too. Just the transmission rates between the first shaft 11 and the first hollow shaft 13 and between the first shaft 11 and the second hollow shaft 14 are different so that the positions of the first switching state D1 and the second switching state D2 are swapped. In detail, the switching sequence of the gearbox 1c is parking state P → second switching state D2 → neutral state N → first switching state D1 or vice versa. In Fig. 6, the neutral state N of the gearbox 1c is shown but one can easily imagine that the other states can be obtained in a way, which is similar to the way the states can be obtained for the gearbox 1a. Figs. 7 to 10 now show schematic views of another example of a gearbox 1d in different switching states. Again, the gearbox 1d comprises a gearbox input 2 (formed by the first shaft 11 here) for coupling an electric motor 3 to the gearbox 1d and a gearbox output 4 (formed by the second shaft 12 here) for coupling wheels of an electric vehicle to the gearbox 1d. Moreover, the gearbox 1d comprises a number of gear wheels 5..8 and at least a first form-fit clutch 9 and a second form-fit clutch 10 providing at least two switchable transmission ratios between the gearbox input 2 and the gearbox output 4. In detail, the gearbox 1d comprises a first primary gear wheel 5 engaging with a first secondary gear wheel 6 and a second primary gear wheel 7 engaging with a second secondary gear wheel 8.

In this embodiment, the gearbox 1d comprises a first shaft 11, a second shaft 12, a first hollow shaft 13 around the second shaft 12 and a second hollow shaft 14 around the first shaft 11. Bearings 15 and 16 support the first hollow shaft 13 on the second shaft 12, and bearings 17 and 18 support the second hollow shaft 14 on the first shaft 11.

The first primary gear wheel 5 is fixed to the first shaft 11, the first secondary gear wheel 6 is fixed to the first hollow shaft 13, the second primary gear wheel 7 is fixed to the second hollow shaft 14 and the second secondary gear wheel 8 is fixed to the second shaft 12. Thus, a first transmission ratio is provided via the first shaft 11 and the first hollow shaft 13 by the first primary gear wheel 5 and the first secondary gear wheel 6, and a second transmission ratio is provided via the second hollow shaft 14 and the second shaft 12 by the second primary gear wheel 7 and the second secondary gear wheel 8.

The second shaft 12 can be coupled to the first hollow shaft 13 by means of the first form-fit clutch 9, and the first shaft 11 can be coupled to the second hollow shaft 14 by means of the second form-fit clutch 10. The first form-fit clutch 9 comprises two clutch bodies 22, 23 arranged on the first hollow shaft 13 and a shifting spline 24 on the inside of the sliding sleeve 21. The second form-fit clutch 10 comprises a clutch body 19 arranged on the second hollow shaft 14 and a shifting spline 20 of a sliding sleeve 29. The sliding sleeve 21 engages with a clutch body 25 on the second shaft 12 and is axially movable including the (inner) shifting spline 24. The sliding sleeve 29 engages with a clutch body 30 on the first shaft 11 and is axially movable including the (inner) shifting spline 20.

The clutch body 25 may be embodied as a separate part mounted to the second shaft 12 or may be embodied as an integral part of the second shaft 12. In the second case, the clutch body 25 may be seen as an outer shifting spline on the second shaft 12. Similar considerations can be made for the clutch bodies 19, 22, 23 and 30. Accordingly, the clutch body 19 may be embodied as a separate part mounted to the second hollow shaft 14 or may be embodied as an integral part of the second hollow shaft 14, wherein in the second case the clutch body 19 may be seen as an outer shifting spline on the second hollow shaft 14. Similarly, the clutch bodies 22 and 23 may be embodied as a separate parts mounted to the first hollow shaft 13 or may be embodied as integral parts of the first hollow shaft 13, wherein in the second case the clutch bodies 22 and 23 may be seen as outer shifting splines on the first hollow shaft 13. Similarly, the clutch body 30 may be embodied as a separate part mounted to the first shaft 11 or may be embodied as an integral part of the first shaft 11, wherein in the second case the clutch body 30 may be seen as an outer shifting spline on the first shaft 11. Similar considerations may also be made for the shifting splines 20 and 24. The shifting spline 20 may be seen as an inner shifting spline and may be integral part of the sliding sleeve 29 or may be embodied as a dedicated ring mounted to the sliding sleeve 29. Similarly, the shifting spline 24 may be seen as an inner shifting spline and may be integral part of the sliding sleeve 21 or may be embodied as a dedicated ring mounted to the sliding sleeve 21.

Moreover, the gearbox 1d comprises a gear wheel 26 on the second shaft 12, which engages with a toothing or gear wheel on the differential 27, to which wheels of an electric vehicle can be coupled. In addition, the gearbox 1d comprises an actuator 31, which is designed to collectively move the sliding sleeve 21 and the sliding sleeve 29. The gearbox 1d together with the electric motor 3 forms an electric drivetrain 28d.

In Figs. 7 to 10, the first shaft 11 is an input shaft and forms the gearbox input 2. The first shaft 11 at the same time can be a motor shaft of the electric motor 3. Likewise, the output shaft 12 is an output shaft and forms the gearbox output 4 in this embodiment. Alternatively, also the gear wheel 26 or the differential 27 can be seen as gearbox output 2. In particular, in the latter case, the second shaft 12 may also be seen as an intermediate shaft. However, the gear wheel 26 or the differential 27 may also be integral part of the gearbox 1d.

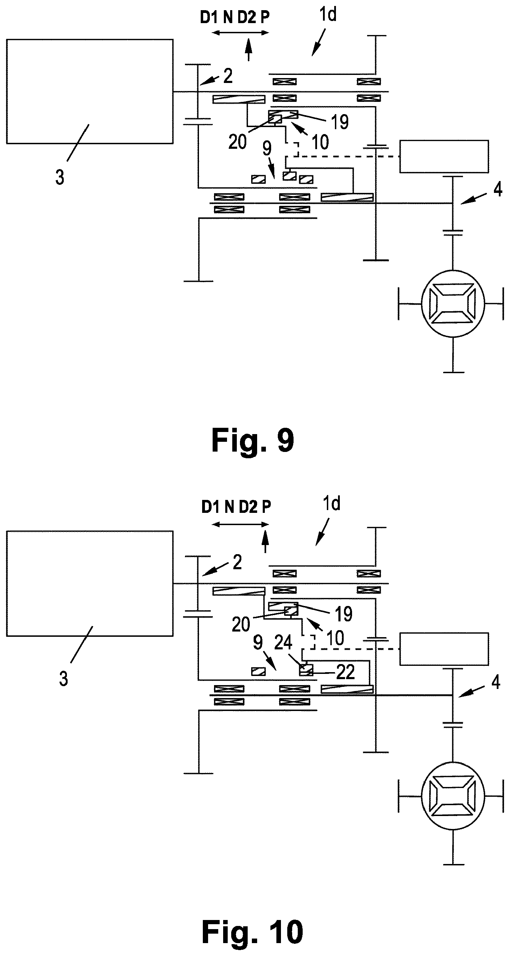

Fig. 7 shows the gearbox 1d in a neutral state N, Fig. 8 shows the gearbox 1d in a first switching state D1 of the form-fit clutches 9, 10 providing a first transmission ratio between the gearbox input 2 and the gearbox output 4 and Fig. 9 shows the gearbox 1d in a second switching state D2 of the form-fit clutches 9, 10 providing a second transmission ratio between the gearbox input 2 and the gearbox output 4. Finally, Fig. 10 shows the gearbox 1d in a parking state P, in which both the first form-fit clutch 9 and the second form-fit clutch 10 are engaged and block a transmission of a rotational movement between the gearbox input 2 and the gearbox output 4.

In detail, in a neutral state N neither the first form-fit clutch 9, nor the second form-fit clutch 10 engages. In the first switching state D1, the first form-fit clutch 9 (i.e. its clutch body 23 and shifting spine 24) engages while the second form-fit clutch 10 disengages. In the second switching state D2, the second form-fit clutch 10 (i.e. its clutch body 19 and shifting spline 20) engages while the first form-fit clutch 9 disengages. In the parking state P, finally, the first form-fit clutch 9 (i.e. its clutch body 22 and shifting spline 24) and the second form-fit clutch 10 (i.e. its clutch body 19 and shifting spline 20) engage.

It should be noted that an actuator 31 is not bound to the gearbox 1d but can also be used in the context of the gearboxes 1a..1c where it can move the sliding sleeve 21.

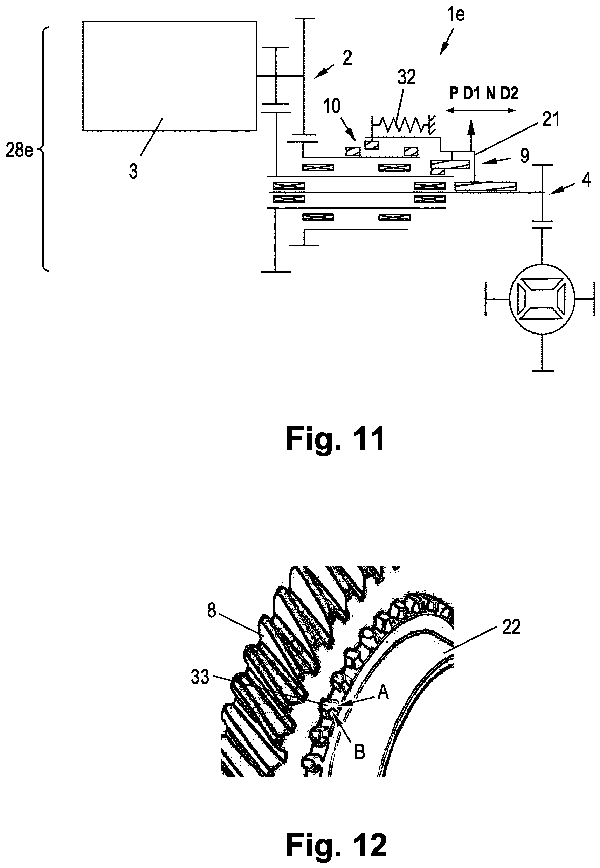

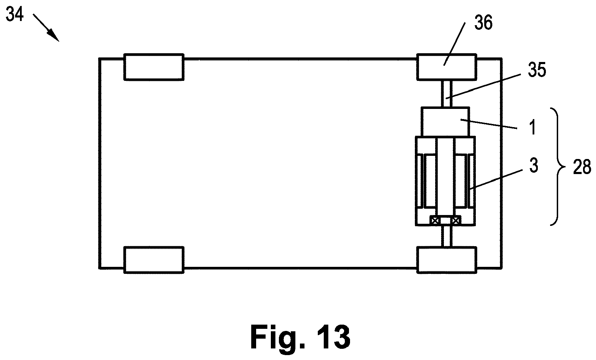

Fig. 11 shows another variant of a gearbox 1e, which is similar to the gearbox 1a depicted in Figs. 1 to 4. Here, a switching from the first switching state D1 to the parking state P causes shifting elements of the second form-fit clutch 10 being spring loaded until the second form-fit clutch 10 is engaged what is symbolically illustrated by the spring 32 in Fig. 11. In Fig. 11 the spring 32 is arranged outside of the sliding sleeve 21, but it can also be arranged in the interior of the sliding sleeve 21 or on the second hollow shaft 14. Generally, both the first form-fit clutch 9 and the second form-fit clutch 10 can engage at the same time only in dedicated positions of the form-fit clutches 9, 10 depending on the first and the second transmission ratio. In the embodiment of Fig. 11, the first form-fit clutch 9 is already engaged when the parking state P is chosen. In addition, the second form-fit clutch 10 is spring loaded so that it engages when the first hollow shaft 13 and the second hollow shaft 14 with their respective clutch bodies 9, 10 reach a position allowing said engaging. If the electric drivetrain 28e is part of a vehicle (see also Fig. 13), moving the vehicle slowly causes the gear wheels 5..7 turning and causes the form-fit clutches 9, 10 to reach a position where the second form-fit clutch 10 may engage in addition to the already engaged first form-fit clutch 9. The above embodiment is not the only possible one where a spring 32 makes sense. It is also possible that a switching from the second switching state D2 to the parking state P causes shifting elements of the first form-fit clutch 9 being spring loaded until the first form-fit clutch 9 engages when the parking state P is adjacent to the second switching state D2.

Beneficially, an accidental actuation of the parking position P at high vehicle speeds shall be avoided. This may be done by an electronic control, which acquires the vehicle speed and forbids actuation of the parking position P above a certain speed threshold. In another embodiment, form-fit elements of the clutches have an angle at the front of the engaging ends. Fig. 12 in this context shows a cutout of a gearbox 1a..1e, in detail the second secondary gear wheel 8 together with the clutch body 22 of the second form-fit clutch 10. Form-fit elements 33 of the clutch body 22 comprise angled front faces A and B, which avoid that the second form-fit clutch 10 can be engaged at high speeds. The very same can be provided for the first form-fit clutch 9.

Fig. 13 finally shows an electric vehicle 34, which comprises an electric drivetrain 28 with a gearbox 1 and an electric motor 3 as outlined above. The electric drivetrain 28 is mechanically coupled to wheels 36 of the electric vehicle 34 by means of side shafts 35. The electric motor 3 may be provided for powering the electric vehicle 34 permanently in a pure electric car or intermittently, e.g. in combination with a combustion engine in a hybrid car.

It is noted that the invention is not limited to the embodiments disclosed hereinbefore, but combinations of the different variants are possible. In reality, the gearbox 1, 1a..1e and the electric vehicle 34 may have more or less parts than shown in the figures. In Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of Reference Numerals

- 1, 1a..1e: gearbox
- 2: gearbox input
- 3: electric motor
- 4: gearbox output
- 5: first primary gear wheel
- 6: first secondary gear wheel
- 7: second primary gear wheel
- 8: second secondary gear wheel
- 9: first form-fit clutch
- 10: second form-fit clutch
- 11: first shaft
- 12: second shaft
- 13: first hollow shaft
- 14: second hollow shaft
- 15, 16: bearing
- 17, 18: bearing
- 19: clutch body / outer spline
- 20: (inner) shifting spline of sliding sleeve
- 21: sliding sleeve
- 22: clutch body / outer spline
- 23: clutch body / outer spline
- 24: (inner) shifting spline of sliding sleeve
- 25: clutch body / outer spline
- 26: gear wheel
- 27: differential
- 28, 28a..28e: electric drivetrain
- 29: sliding sleeve
- 30: clutch body / outer spline
- 31: actuator
- 32: spring
- 33: form-fit element
- 34: vehicle
- 35: side shaft
- 36: wheel
- A: angled front face
- B: angled front face
- D1: first switching state
- D2: second switching state
- N: neutral state
- P: parking state

## Claims

1. Gearbox (1, 1a..1d) for an electric drivetrain (28), comprising
- a gearbox input (2) for coupling an electric motor (3) to the gearbox (1, 1a..1d),
- a gearbox output (4) for coupling wheels of an electric vehicle to the gearbox (1, 1a..1d) and
- a number of gear wheels (5..8) and at least a first and a second form-fit clutch (9, 10) providing at least two switchable transmission ratios between the gearbox input (2) and the gearbox output (4), wherein in a first switching state (D1) of the form-fit clutches (9, 10), a first transmission ratio is provided between the gearbox input (2) and the gearbox output (4) and wherein in a second switching state (D2) of the form-fit clutches (9, 10), a second transmission ratio is provided between the gearbox input (2) and the gearbox output (4),
**characterized in that**
- a parking state (P) is provided, in which both the first transmission ratio and the second transmission ratio are provided between the gearbox input (2) and the gearbox output (4) at the same time and a transmission of a rotational movement between the gearbox input (2) and the gearbox output (4) is blocked.

2. Gearbox (1, 1a..1d) as claimed in claim 1, **characterized in that**
- in the first switching state (D1), the first form-fit clutch (9) is engaged and the second form-fit clutch (10) is disengaged and
- in the second switching state (D2), the first form-fit clutch (9) is disengaged and the second form-fit clutch (10) is engaged and
- in the parking state (P) both the first form-fit clutch (9) and the second form-fit clutch (10) are engaged.

3. Gearbox (1, 1a..1d) as claimed in claim 1 or 2, comprising
- a first shaft (11),
- a second shaft (12),
- a first hollow shaft (13) around the second shaft (12) and
- a second hollow shaft (14) around the first hollow (13) shaft,
- wherein a first transmission ratio is provided via the first shaft (11) and the first hollow shaft (13),
- wherein a second transmission ratio is provided via the first shaft (11) and the second hollow shaft (14) and
- wherein the second shaft (12) can be coupled to the first hollow shaft (13) by means of the first form-fit clutch (9), to the second hollow shaft (14) by means of the second form-fit clutch (10) and to both the first hollow shaft (13) and the second hollow shaft (14) by means of the first form-fit clutch (9) and the second form-fit clutch (10).

4. Gearbox (1, 1a..1d) as claimed in claim 1 or 2, comprising
- a first shaft (11),
- a second shaft (12),
- a first hollow shaft (13) around the second shaft (12) and
- a second hollow shaft (14) around the first shaft (11),
- wherein a first transmission ratio is provided via the first shaft (11) and the first hollow shaft (13),
- wherein a second transmission ratio is provided via the second hollow shaft (14) and the second shaft (12),
- wherein the second shaft (12) can be coupled to the first hollow shaft (13) by means of the first form-fit clutch (9), to the second hollow shaft (14) by means of the second form-fit clutch (10) and to both the first hollow shaft (13) and the second hollow shaft (14) by means of the first form-fit clutch (9) and the second form-fit clutch (10).

5. Gearbox (1, 1a..1d) as claimed in any one of claims 1 to 4, **characterized in that** neutral state (N) is provided, in which neither the first form-fit clutch (9), nor the second form-fit clutch (10) are engaged disengaging the gearbox input (2) from the gearbox output (4).

6. Gearbox (1, 1a..1d) as claimed in any one of claims 1 to 5, **characterized in that** the form-fit clutches (9, 10) are embodied as dog clutches or as a combination of a clutch body (19, 22, 23) and a shifting spline (20, 24).

7. Gearbox (1, 1a..1d) as claimed in any one of claims 1 to 6, **characterized in that** a switching sequence is
a) parking state (P) → first switching state (D1) → neutral state (N) → second switching state (D2) or vice versa or
b) parking state (P) → second switching state (D2) → neutral state (N) → first switching state (D1) or vice versa.

8. Gearbox (1, 1a..1d) as claimed in any one of claims 1 to 7, **characterized in that**
- switching from the first switching state (D1) to the parking state (P) causes shifting elements of the second form-fit clutch (10) being spring loaded until the second form-fit clutch (10) engages or
- switching from the second switching state (D2) to the parking state (P) causes shifting elements of the first form-fit clutch (9) being spring loaded until the first form-fit clutch (9) engages.

9. Gearbox (1, 1a..1d) as claimed in any one of claims 1 to 8, **characterized in that** the form-fit elements (33) of the clutches (9, 10) have an angle at the front of the engaging ends.

10. Electric drivetrain (28, 28a..28e), **characterized by** a gearbox (1, 1a..1d) according to any one of claims 1 to 9 and an electric machine (3) coupled to the gearbox input (2) of the gearbox (1, 1a..1d).

11. Vehicle (34) having at least two axles, at least one of which is driven, **characterized in that** said drive is provided at least partially or intermittently by the electric drivetrain (28, 28a..28e) according to claim 10.
